# EUROPEAN PATENT APPLICATION

(11) **EP 2 369 671 A1**
(43) Date of publication of application: **28.09.2011**
(21) Application number: 11156566.9
(22) Date of filing: 02.03.2011
(51) Int. Cl.: H01M 10/0567, H01M 10/052, H01M 10/42, H01M 4/525

(54) **Non-aqueous electrolyte secondary battery**

(30) Priority: 15.03.2010 JP 2010057888
(71) Applicant: Sanyo Electric Co., Ltd., Osaka 570-8677 (JP)
(72) Inventor: Iwanaga, Masato, Moriguchi-shi Osaka 5708677 (JP); Yamashita, Noriko, Moriguchi-shi Osaka 5708677 (JP); Kaiduka, Atsushi, Moriguchi-shi Osaka 5708677 (JP); Abe, Koji, Minato-ku Tokyo (JP); Miyoshi, Kazuhiro, Ube-shi, Yamaguchi (JP); Kondo, Masahide, Ube-shi, Yamaguchi (JP)
(74) Representative: Glawe, Delfs, Moll

(57) **Abstract**

A positive electrode active material of a nonaqueous electrolyte secondary battery is composed of lithium-cobalt composite oxide containing at least one of zirconium, titanium, aluminum, and erbium, and the nonaqueous electrolyte includes an additive expressed by General Formula (1) having an acetylene group and a methylsulfonyl group at each end of the molecule. It has the effect of forming an SEI surface film as with the case of VC or the like, as well as having a higher oxidation resistance than that of VC or the like. Thus the nonaqueous electrolyte secondary battery employing as positive electrode active material a lithium-cobalt composite oxide with a particular dissimilar metallic element added, in which decomposition of the nonaqueous electrolytic solution during storage at high temperature in a charged state is suppressed, and there is little battery swelling is provided.

## Description

### TECHNICAL FIELD

The present invention relates to a nonaqueous electrolyte secondary battery that suppresses battery swelling in a high temperature environment. More particularly, the invention relates to a nonaqueous electrolyte secondary battery that has high safety and that suppresses battery swelling caused by the decomposition of a nonaqueous electrolytic solution in a high temperature environment even when dissimilar metallic element-containing positive electrode active material is used as positive electrode active material.

### BACKGROUND ART

Recently, as power supplies for driving portable electronic equipment, such as cell phones, portable personal computers, and portable music players, and further, as power supplies for hybrid electric vehicles (HEVs) and electric vehicles (EVs), nonaqueous secondary batteries represented by lithium ion secondary batteries having a high energy density and high capacity are widely used.

For the positive electrode active material in these nonaqueous secondary batteries, use is made, either singly or mixed together, of lithium transition-metal composite oxides, which are expressed by LiMO₂ (where M is at least one of Co, Ni, and Mn) (namely, LiCoO₂, LiNiO₂, LiNiₓCo₁₋ₓO₂ (x = 0.01 to 0.99), LiMnO₂, LiMn₂O₄, and LiNiₓMnyCo₂O₂ (x + y + z = 1), or LiFePO₄ or the like, all of which can reversibly absorb and desorb lithium ions.

Among them, lithium-cobalt composite oxides and dissimilar metallic element-containing lithium-cobalt composite oxides are primarily used because their battery characteristics in various aspects are especially higher than those of other oxides. However, cobalt is expensive and exists in small amounts as a natural resource. Thus, in order to continue to use such lithium-cobalt composite oxides and dissimilar metallic element-containing lithium-cobalt composite oxides as the positive electrode active material of nonaqueous secondary batteries, it is desired to raise the performance of nonaqueous secondary batteries to even higher levels.

One of the methods for increasing the capacity of a nonaqueous electrolyte secondary battery is to increase the packing density of the positive electrode active material or negative electrode active material. However, particularly in order to pack the positive electrode active material at high density, the positive electrode plate has to be rolled with high pressure. During that process, the positive electrode active material particles break up, exposing coarse active portions on the surface, which become reaction spots where destruction of the active material structure, reactions decomposing the nonaqueous electrolytic solution, and so forth are triggered. As a result, the cycling and storage characteristics decline.

There has long been known a method of adding vinylene carbonate (VC), a sultone compound, or a compound having a triple bond as an additive into a nonaqueous electrolytic solution in order to suppress reductive decomposition of the nonaqueous solvent. The additive forms a negative electrode surface film (SEI: Solid Electrolyte Interface; hereinafter referred to as "SEI surface film"), also referred to as a passivation layer, that prevents direct reaction of the negative electrode active material with the nonaqueous solvent.

For example, JP-A-8-45545 and WO2005/008829 disclose inventions in which at least one compound selected from VC and derivatives thereof is added as an additive for the nonaqueous electrolytic solution of a nonaqueous electrolyte secondary battery, and the additive itself is reductively decomposed on the surface of the negative electrode to form an SEI surface film on the negative electrode active material before insertion of lithium into the negative electrode in the course of the first charging, so that the surface film works as a barrier for preventing insertion of the solvent molecules around the lithium ions.

Furthermore, JP-A-2000-195545 discloses an invention of a nonaqueous electrolyte secondary battery in which a compound having a triple bond, such as a compound expressed by General Formula (6), is added as an additive into a nonaqueous electrolyte.

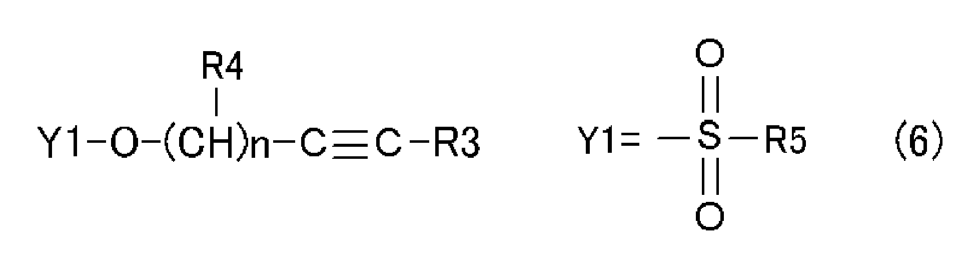

JP-A-2000-195545 also discloses that the compound expressed by General Formula (6) has, in addition to the above effect of forming the SEI surface film, the effect, due to undergoing oxidative decomposition earlier than the nonaqueous solvent in the nonaqueous electrolytic solution, of preventing oxidative decomposition of the nonaqueous solvent in the nonaqueous electrolytic solution at the micro overvoltage areas where the potential is excessively high on the surface of the positive electrode active material.

JP-A-2006-244723 discloses a nonaqueous electrolyte secondary battery that employs positive electrode active material containing lithium cobalt oxide (LiCoO₂) with zirconium (Zr) added as well as a nonaqueous electrolytic solution containing LiBF₄ and an unsaturated cyclic carbonate (cyclic ester carbonate), in order to suppress structural destruction of the positive electrode active material under high density packing. According to the disclosure in JP-A-2006-244723, the nonaqueous electrolyte secondary battery that is obtained has high capacity and superior cycling characteristics.

As described above, adding VC, a sultone compound, or a compound having a triple bond, as an additive into a nonaqueous electrolytic solution can suppress reductive decomposition or oxidative decomposition of the nonaqueous solvent. However, positive electrode active material composed of lithium-cobalt composite oxide with a dissimilar metallic element added has a feature of maintaining a highly oxidized state without the activity of the positive electrode active material being degraded, and in high temperature environments of 80°C or higher where the nonaqueous electrolytic solution will readily decompose, the VC or other additive will be oxidatively decomposed, so that the effect of suppressing gas generation due to decomposition of the nonaqueous electrolytic solution will not be adequately exerted.

The present inventors have carried out many and various investigations concerning an additive that can suppress gas generation due to decomposition of the nonaqueous solvent in a nonaqueous electrolyte secondary battery employing positive electrode active material composed of lithium-cobalt composite oxide with a dissimilar metallic element added, even when the battery is stored in a high temperature environment of 80°C or higher in a charged state over a long term. As a result, the inventors arrived at the present invention upon discovering that a particular additive having an acetylene group and a methylsulfonyl group at both ends of the molecules has such an effect.

### SUMMARY

More precisely, an advantage of some aspects of the invention is to provide a nonaqueous electrolyte secondary battery employing as positive electrode active material a lithium-cobalt composite oxide with a particular dissimilar metallic element added, in which decomposition of the nonaqueous electrolytic solution during storage at high temperature in a charged state is suppressed, and there is little battery swelling.

According to an aspect of the invention, a nonaqueous electrolyte secondary battery includes a positive electrode containing positive electrode active material, a negative electrode containing negative electrode active material, a nonaqueous electrolyte containing a nonaqueous solvent and an electrolyte salt, and a separator. The positive electrode active material is composed of lithium-cobalt composite oxide containing at least one of zirconium, titanium, aluminum, and erbium. The nonaqueous electrolyte includes an additive expressed by General Formula (1): 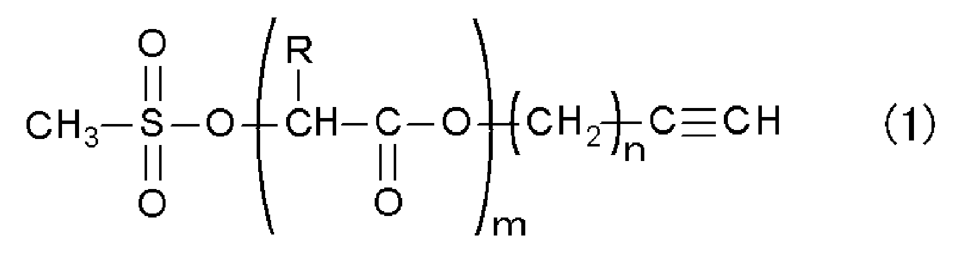 (where R is a methyl group or a hydrogen atom, m is 0 or 1, and n is 1 or 2).

In the nonaqueous electrolyte secondary battery according to the aspect of the invention, the positive electrode active material is composed of lithium-cobalt composite oxide containing at least one of zirconium, titanium, aluminum, and erbium. The positive electrode active material contains at least one of zirconium, titanium, aluminum, and erbium, the lithium-cobalt composite oxide itself gains increased structural stability, and therefore deterioration of the positive electrode, or self-discharge, during storage at high temperature in a charged state can be suppressed. The total amount of zirconium, titanium, aluminum, and erbium added is preferably 0.01 to 4% by mol relative to the amount of the lithium-cobalt composite oxide. If the amount is less than 0.01% by mol, the suppressing effect on the positive electrode deterioration will be inadequate, and if the amount is more than 4% by mol, the capacity will decrease.

In the nonaqueous electrolyte secondary battery according to the aspect of the invention, the nonaqueous electrolyte includes an additive expressed by General Formula (1): 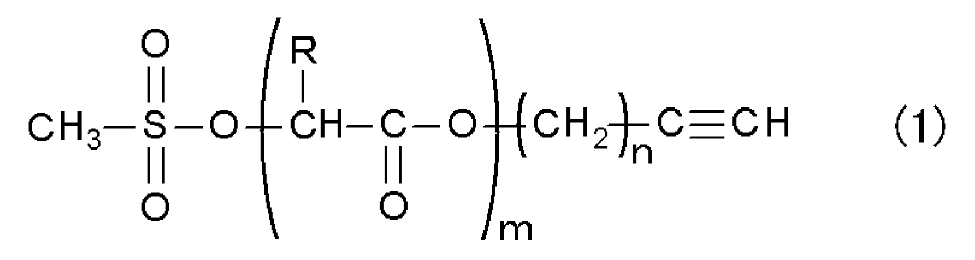 (where R is a methyl group or a hydrogen atom, m is 0 or 1, and n is 1 or 2).

Specific examples of the compound expressed by General Formula (1) include 2-propynyl 2-(methanesulfonyloxy)propionate, 3-butynyl 2-(methanesulfonyloxy)propionate, 2-propynyl methanesulfonyloxyacetate, 3-butynyl methanesulfonyloxyacetate, 2-propynyl methanesulfonate, and 3-butynyl methanesulfonate. Preferred is 2-propynyl 2-(methanesulfonyloxy)propionate, 2-propynyl methanesulfonyloxyacetate, or 2-propynyl methanesulfonate. More preferred is 2-propynyl 2-(methanesulfonyloxy)propionate or 2-propynyl methanesulfonate.

Two or more of the compounds expressed by General Formula (1) may be used in combination, and in particular, it is preferable to use 2-propynyl 2-(methanesulfonyloxy)propionate and 2-propynyl methanesulfonate in combination.

The compound expressed by General Formula (1) has an acetylene group and a methylsulfonyl group at each end of the molecule. It has the effect of forming an SEI surface film as with the case of VC or the like, as well as having a higher oxidation resistance than that of VC or the like. Moreover, it is oxidatively decomposed on the surface of the positive electrode plate earlier than the decomposition of the nonaqueous solvent in the nonaqueous electrolytic solution, with the result that the nonaqueous solvent does not readily undergo oxidative decomposition. In addition, when a nonaqueous electrolyte secondary battery employing a lithium-cobalt composite oxide containing at least one of zirconium, titanium, aluminum, and erbium as positive electrode active material is stored at a high temperature of 80°C or higher in a charged state over a long term, the nonaqueous electrolytic solution will readily oxidatively decompose. However, when the additive expressed by General Formula (1) is added into the nonaqueous electrolytic solution, then even when stored at a high temperature of 80°C or higher in a charged state over a long term, the nonaqueous solvent will not readily decompose. Thus, a nonaqueous electrolyte secondary battery in which little battery swelling occurs can be obtained.

Even when a compound having a triple bond inside the molecule and having methylsulfonyl groups at both ends of the molecule, a compound having methylsulfonyl groups at both ends of the molecule but having no triple bond, or a compound having acetylene groups at both ends of the molecule is used as an additive, such remarkable advantages as those achieved by the present invention cannot be provided.

Examples of the nonaqueous solvent capable of being used in the nonaqueous electrolyte in the nonaqueous electrolyte secondary battery of the invention include cyclic carbonates, chain carbonates, esters, cyclic ethers, chain ethers, nitriles, and amides.

Examples of the cyclic carbonate include ethylene carbonate, propylene carbonate, and butylene carbonate. A part of or all of hydrogen groups of the cyclic carbonate may be fluorinated. Examples of the fluorinated cyclic carbonates that are usable include trifluoropropylene carbonate and fluoroethylene carbonate. Examples of the chain carbonates include symmetric chain carbonates such as dimethyl carbonate and diethyl carbonate and asymmetric chain carbonates such as ethyl methyl carbonate, methyl propyl carbonate, ethyl propyl carbonate, and methyl isopropyl carbonate. A part of or all of hydrogens of the chain carbonate may be fluorinated. Both a symmetric chain carbonate and an asymmetric chain carbonate are preferably contained as chain carbonate because thereby increase in the battery thickness during storage at high temperature in a charged state will be suppressed.

Examples of the ester include methyl acetate, ethyl acetate, propyl acetate, methyl propionate, ethyl propionate, and γ-butyrolactone. Examples of the cyclic ether include 1,3-dioxolane, 4-methyl-1,3-dioxolane, tetrahydrofuran, 2-methyltetrahydrofuran, propylene oxide, 1,2-butylene oxide, 1,4-dioxane, 1,3,5-trioxane, furan, 2-methylfuran, 1,8-cineole, and crown ethers.

Examples of the chain ether include 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

Examples of the nitrile include acetonitrile, and examples of the amide include dimethylformamide.

At least one solvent selected from the solvents described above may be used as the nonaqueous solvent for the nonaqueous electrolyte in the nonaqueous electrolyte secondary battery according to the aspect of the invention. In particular, from the viewpoints of solvent viscosity and ion conductivity, a cyclic carbonate and a chain carbonate are preferably used in the a volume ratio of 10 : 90 to 40 : 60. In the nonaqueous electrolyte secondary battery according to the aspect of the invention, the nonaqueous electrolyte may be not only liquid but also gel.

As the electrolyte salt for the nonaqueous electrolyte in the nonaqueous electrolyte secondary battery according to the aspect of the invention, a salt commonly used as the electrolyte in related art nonaqueous electrolyte secondary batteries may be used. For example, at least one compound selected from among LiBF₄, LiPF₆, LiCF₃SO₃, LiC₄F₉SO₃, LiN(CF₃SO₂)₂, LiN(C₂F₅SO₂)₂, LiAsF₆, and lithium difluoro(oxalato)borate may be used. Particularly preferred among these is LiPF₆. Such solute is preferably dissolved in a concentration of 0.5 to 2.0 mol/L relative to the nonaqueous solvent.

In the nonaqueous electrolyte secondary battery according to the aspect of the invention, as an overcharge additive, biphenyl, a cycloalkylbenzene compound, or a compound having a quaternary carbon on a benzene ring such as tert-butylbenzene and tert-amylbenzene may be added to the nonaqueous electrolyte in a ratio of 0.1 to 4.0% by mass. When such compound is added, a related art nonaqueous electrolyte secondary battery may have an increased battery thickness after storage at high temperature in a charged state, but such thickness increase is markedly suppressed in the nonaqueous electrolyte secondary battery according to the aspect of the invention.

Examples of the material to be used for the negative electrode active material of the invention include lithium metal, lithium alloy, carbon material including graphite, silicon material, lithium composite oxide, and the like materials capable of absorbing and desorbing lithium.

In the nonaqueous electrolyte secondary battery according to the aspect of the invention, it is preferable that the nonaqueous electrolyte contain the additive in a ratio of 0.2 to 2.0% by mass relative to the total mass of the nonaqueous electrolyte.

If the addition proportion of the additive expressed by General Formula (1) is less than 0.2% by mass relative to the total mass of the nonaqueous electrolyte, the advantageous effects of adding the additive will not be manifested, and if the proportion is more than 2.0% by mass, the opposite effect will be produced and the battery swelling will increase. Therefore, such proportions are not desirable.

In the nonaqueous electrolyte secondary battery according to the aspect of the invention, it is preferable that the compound expressed by General Formula (1) be a compound expressed by Chemical Structural Formula (2) or (3):

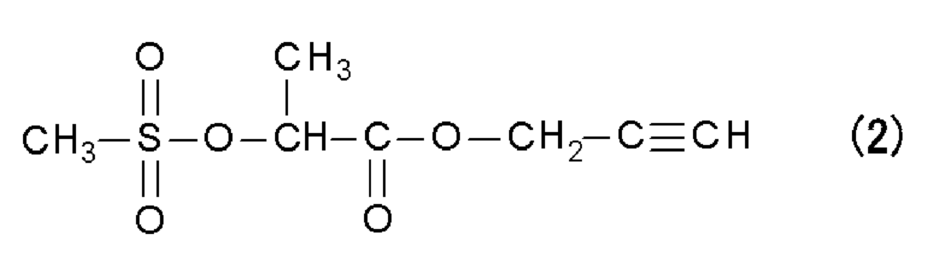

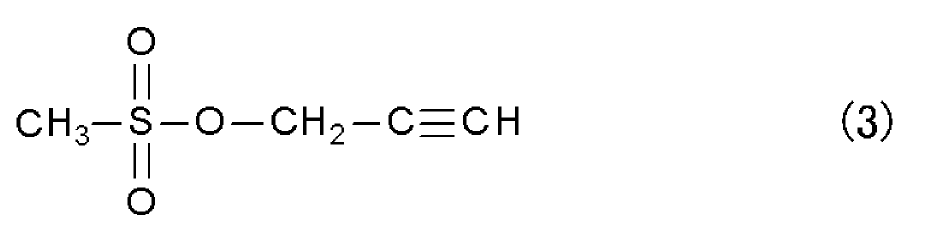

The compound expressed by Chemical Structural Formula (2) is a compound known as PMP (2-propynyl 2-(methanesulfonyloxy)propionate), and the compound expressed by Chemical Structural Formula (3) is a compound known as MSP (2-propynyl methanesulfonate). When such PMP or MSP is used, the above-described advantages are saliently manifested. Use of PMP and MSP in combination is more preferable.

In the nonaqueous electrolyte secondary battery according to the aspect of the invention, it is preferable that the nonaqueous electrolyte further include VC as the additive.

When both a compound expressed by General Formula (1) and VC are present, the SEI film that is formed will be stronger than an SEI film formed from one of those additives alone, and thus gas generation due to the reaction between the nonaqueous electrolyte and the negative electrode active material during storage at high temperature in a charged state can be suppressed. The content of the VC copresent with the compound of General Formula (1) is preferably 0.1 to 5% by mass and more preferably 0.5 to 3% by mass.

### DESCRIPTION OF EXEMPLARY EMBODIMENTS

Exemplary embodiments of the invention will now be described in detail with reference to examples and comparative examples. However, the examples described below are merely illustrative examples of nonaqueous electrolyte secondary batteries that embody the technical spirit of the invention, and are not intended to limit the invention to these particular nonaqueous electrolyte secondary batteries. The invention can be equally applied to various modified cases without departing from the technical spirit described in the claims.

First, a specific method for producing a nonaqueous electrolyte secondary battery common to various examples and comparative examples will be described.

### Preparation of Positive Electrode Plate

Zirconium (Zr) containing-lithium cobalt oxide (LiCoO₂) used in the Examples 1 to 4 and the Comparative Examples 2, 4, and 5 was prepared as follows. First, a predetermined amount of zirconium sulfate (Zr(SO₄)₂) was added into an aqueous cobalt sulfate (CoSO₄) solution, and then sodium hydrogen carbonate (NaHCO₃) was added to give cobalt carbonate (CoCO₃) with zirconium coprecipitated. Then, the cobalt carbonate with zirconium coprecipitated was thermally decomposed in the presence of oxygen to give tricobalt tetroxide (Co₃O₄) containing coprecipitated zirconium as cobalt source starting material.

Next, lithium carbonate (Li₂CO₃) as lithium source starting material and tricobalt tetraoxide containing coprecipitated zirconium were weighed so that the molar ratio of the lithium and the cobalt was 1:1. Next, these compounds were mixed in a mortar, and then the obtained mixture was calcined in air at 850°C for 20 hours to synthesize a calcined product of lithium cobalt oxide containing 0.5% by mol of zirconium. The synthesized calcined product was then pulverized until the average particle size was 10 µm to produce the positive electrode active material. The content of zirconium in the positive electrode active material composed of lithium cobalt oxide thus obtained was determined by ICP (inductively coupled plasma) emission spectrometry analysis.

Next, a mixture was prepared by mixing 96 parts by mass of the positive electrode active material powder composed of lithium cobalt oxide containing coprecipitated zirconium obtained as described above, 2 parts by mass of carbon powder as conductive material, and 2 parts by mass of polyvinylidene fluoride powder as a binding agent, and the mixture was mixed with an N-methylpyrrolidone (NMP) solution to prepare positive electrode mixture slurry. The positive electrode mixture slurry was applied on both sides of an aluminum collector having a thickness of 15 µm by the doctor blade method and then dried to form an active material layer on both sides of the positive electrode collector. Then, a positive electrode plate was rolled using a compression roller so as to have a packing density of 3.8 g/ml to have a short side length of 36.5 mm for use in the First to Fourth Examples 1 to 4 and the Comparative Examples 2, 4, and 5.

Positive electrode plates for the Comparative Examples 1 and 3 were prepared in a similar manner to the above except that zirconium was not added. Positive electrode plates for the Examples 5 and 6 were prepared in a similar manner to the above except for using titanium sulfate (TiSO₄) and aluminum sulfate (Al₂(SO₄)₃), respectively, in place of zirconium sulfate. A positive electrode plate for the Example 7 was prepared in a similar manner to the above except for using a dispersion of erbium carbonate (Er₂(CO₃)₃) on the surface of lithium cobalt oxide particles that was obtained by dispersing lithium cobalt oxide particles containing 0.5% by mol of magnesium (Mg) and 0.5% by mol of aluminum as a solid solution in an aqueous erbium sulfate (Er₂(SO₄)₃) solution and adding sodium hydrogen carbonate thereto for neutralization. In each case, the content of titanium, aluminum, and erbium in the lithium cobalt oxide serving as the positive electrode active material was determined by the ICP method to be 0.5% by mol.

### Preparation of Negative Electrode

A negative electrode plate common to the Examples 1 to 7and the Comparative Examples 1 to 5 was prepared as follows. Slurry was prepared by dispersing in water 97.5 parts by mass of graphite powder as negative electrode active material, 1 part by mass of carboxymethylcellulose (CMC) as a thickener, and 1.5 parts by mass of styrene-butadiene rubber (SBR) as a binding agent. The slurry was applied on both sides of a copper negative electrode collector having a thickness of 8 µm by the doctor blade method and then dried to form an active material layer on both sides of the negative electrode collector. Then a negative electrode plate was rolled using a compression roller so as to have a packing density of 1.6 g/ml and a short side length of 37.5 mm. The amount of the active material applied on the negative electrode plate was controlled so that the initial charging capacity of the negative electrode would be 100% or more per unit area with respect to the initial charging capacity per unit area of the opposed positive electrode plate.

### Preparation of Nonaqueous Electrolytic Solution

A nonaqueous electrolytic solution was prepared as follows. Ethylene carbonate (EC), methyl ethyl carbonate (MEC), and diethyl carbonate (DEC) were mixed in a volume ratio of 35 : 45 : 20, and 2% by mass of VC and 2% by mass of cyclohexylbenzene (CHB) were further added relative to the total mass of the nonaqueous electrolyte. As necessary, as an additive, PMP, MSP, 2-butyne-1,4-diol dimethanesulfonate (BDMS, see Chemical Formula (4)), di(2-propynyl) oxalate (D2PO, see Chemical Formula (5)), and 1,4-butanediol dimethanesulfonate (BSF, see Chemical Formula (6)) were appropriately added. CHB is an additive for securing safety when overcharge occurs. Specific composition ratios are listed in Table 1. In each case, LiPF₆ was added as the electrolyte salt so as to have a concentration of 1.0 mol/L.

BDMS

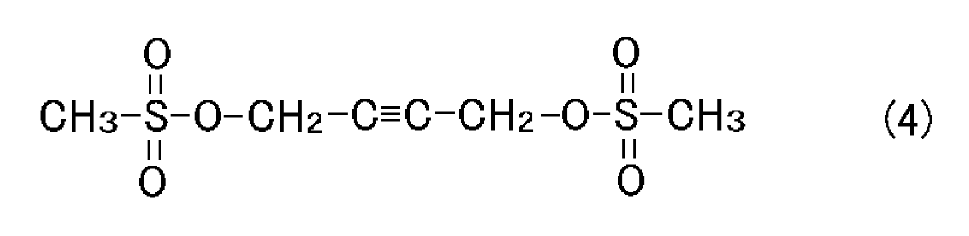

D2PO

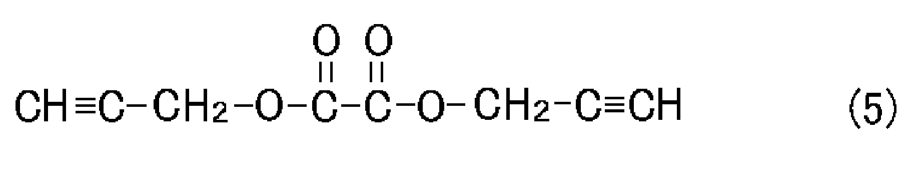

BSF

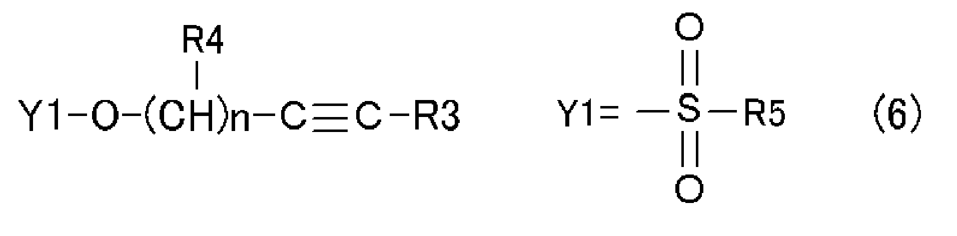

### Preparation of Nonaqueous Electrolyte Secondary Battery

The positive electrode plate, the negative electrode plate, and the nonaqueous electrolytic solution each prepared as described above and an aluminum outer can (can thickness (can wall thickness in the thickness direction of the battery) 0.2 mm) were used to prepare a prismatic nonaqueous electrolyte secondary battery (capacity 800 mAh, thickness 5.5 mm, width 34 mm, height 36 mm) pertaining to the Examples 1 to 7 and the Comparative Examples 1 to 5. A polyolefin microporous membrane was used as a separator.

### Measurement of High Temperature Charged Storage Characteristics

High temperature charged storage characteristics were determined as follows. Each battery pertaining to the Examples 1 to 7 and the Comparative Examples 1 to 5 was charged at 25°C at a constant current of 1 It = 800 mA. After the battery voltage reached 4.2 V, the battery was charged at a constant voltage of 4.2 V until the charging current reached (1/50) It = 16 mA, to achieve a fully charged state. Then, each fully charged battery was left in a constant temperature bath at 80°C for 48 hours. After the 48 hours, each battery was taken out and left in a constant temperature bath at 25°C. When the battery temperature reached 25°C, the thickness of the battery outer can was measured with vernier calipers. The results are listed in Table 1.

**[Table 1]**

| | Element added to positive electrode | Additive | | *Battery swelling (mm) | |
|---|---|---|---|---|---|
| | | Compound name | Amount added (% by mass) | | |
| Comparative Example 1 | - | - | - | 6.2 | Δ |
| Comparative Example 2 | Zr | - | 0 | 6.1 | Δ |
| Comparative Example 3 | - | PMP | 0.4 | 6.1 | Δ |
| Example 1 | Zr | PMP | 0.4 | 5.7 | O |
| Example 2 | Zr | MSP | 0.4 | 5.8 | O |
| Comparative Example 4 | Zr | D2PO | 0.4 | 6.4 | × |
| Comparative Example 5 | Zr | BDMS | 0.4 | 6.3 | × |
| Example 3 | Zr | PMP | 1.0 | 5.8 | O |
| Example 4 | Zr | PMP | 2.0 | 6.0 | O |
| Example 5 | Ti | PMP | 0.4 | 5.8 | O |
| Example 6 | Al | PMP | 0.4 | 5.9 | O |
| Example 7 | Er | PMP | 0.4 | 5.7 | O |

| | | | | | |
|---|---|---|---|---|---|
| *: after storage at 80°C for 48 hours in a fully charged state | | | | | |

From the results shown in Table 1, the following will be seen. The battery of the Comparative Example 1, in which lithium cobalt oxide without any dissimilar metallic elements was used for the positive electrode, and VC and CHB were added to the nonaqueous electrolytic solution but without any other additives, had a battery thickness of 6.2 mm after storage at high temperature in a charged state. The originally designed battery thickness was 5.5 mm, and thus the increase in the battery thickness was 0.7 mm after storage at high temperature in a charged state.

Furthermore, the battery of the Comparative Example 2, in which lithium cobalt oxide with zirconium added was used as the positive electrode active material and the nonaqueous electrolytic solution used was the same as that in the Comparative Example 1, had a battery thickness of 6.1 mm after storage at high temperature in a charged state. The battery swelling was suppressed as compared with the battery of the Comparative Example 1 but was still unsatisfactory. This supports the supposition that although the side reactions due to the deterioration of the positive electrode active material are suppressed, the oxidation state is maintained, with the result that the oxidative decomposition of the nonaqueous electrolytic solution cancels out the swelling suppressing effect, and the effect is inadequate.

Furthermore, the battery of the Comparative Example 3, in which lithium cobalt oxide without any dissimilar metallic elements was employed as the positive electrode active material and a nonaqueous electrolyte obtained by adding 0.4% by mass of PMP as an additive relative to the total mass of the nonaqueous electrolytic solution into lithium cobalt oxide of the Comparative Example 1 was employed, had a battery thickness of 6.1 mm after storage at high temperature in a charged state. The results were similar to those with the battery of the Comparative Example 1. This indicates that when lithium cobalt oxide without any dissimilar metallic elements is used as the positive electrode active material, then even if PMP is added to the nonaqueous electrolytic solution, the suppressing effect on battery swelling is not manifested during storage at high temperature in a charged state.

By contrast, the battery of the Example 1, in which lithium cobalt oxide with zirconium added was employed as the positive electrode active material and the same nonaqueous electrolytic solution as that in the Comparative Example 2 was employed, had a battery thickness of 5.7 mm after storage at high temperature in a charged state. The increase in the battery thickness after storage at high temperature in a charged state was substantially smaller than with the batteries of the Comparative Examples 1 to 3. This is interpreted as follows. When lithium cobalt oxide with zirconium added was used as the positive electrode active material and PMP was added to the nonaqueous electrolytic solution, the suppressing effect on decomposition of the nonaqueous electrolytic solution that was due to the increase in the structure stability of the lithium cobalt oxide itself, and the suppressing effect of the PMP on decomposition of the nonaqueous electrolytic solution, were synergistically exerted, and thus the increase in the battery thickness after storage at high temperature in a charged state was substantially smaller.

Furthermore, when the PMP that was used as an additive in the nonaqueous electrolytic solution in the nonaqueous electrolyte secondary battery of the Example 1 was replaced with MSP (Example 2), D2PO (Comparative Example 4), or BDMS (Comparative Example 5) (the amount added was constant at 0.4% by mass relative to the total mass of the nonaqueous electrolytic solution), the thickness of the battery after storage at high temperature in a charged state in the Example 2 employing MSP was almost the same as that of the battery in the Example 1, but those of the battery in the Comparative Example 4 employing D2PO and of the battery in the Comparative Example 5 employing BDMS were higher than those of the batteries in the Comparative Examples 1 to 3.

This means that when lithium cobalt oxide with zirconium added was used as the positive electrode active material, the suppressing effect on the increase in the battery thickness after storage at high temperature in a charged state was observed with PMP and MSP, but was not observed with D2PO and BDMS, as the additive added into the nonaqueous electrolytic solution. PMP and MSP are both compounds having a methylsulfonyl group and an acetylene group at both molecular ends. By contrast, D2PO has acetylene groups at both molecular ends but has no methylsulfonyl group. BDMS has methylsulfonyl groups at both molecular ends and has an acetylene group in the molecule.

The detailed mechanisms causing such phenomenon are currently unidentified, but it is tentatively considered that thanks to having a carbon-carbon triple bond at one of its molecular ends and a methylsulfonyl group at the other end, the additive solidly covers the reaction spots on the positive electrode active material, and thus the gas generation can be suppressed even at a high temperature of 80°C or higher.

Thus, in the case where lithium cobalt oxide with zirconium added is used as the positive electrode active material, when a compound having a methylsulfonyl group and an acetylene group at each molecular end is used as an additive for the nonaqueous electrolytic solution, a suppressing effect on the increase in the battery thickness, that is, a suppressing effect on the decomposition of the nonaqueous electrolytic solution, will be observed after storage at high temperature in a charged state. A compound having such structure is typically a compound expressed by General Formula (1):

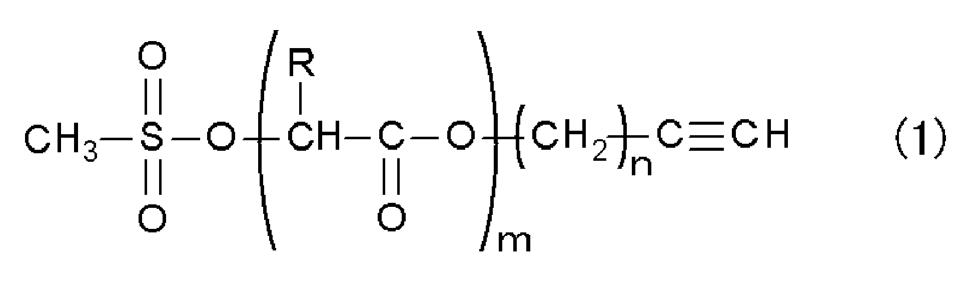

(where R is a methyl group or a hydrogen atom, m is 0 or 1, and n is 1 or 2).

Furthermore, when comparing the results from the batteries of the Examples 1, 3, and 4, in which lithium cobalt oxide with zirconium added was used as the positive electrode active material and PMP was added in varied amounts as the additive for the nonaqueous electrolytic solution, namely, 0.4% by mass in the Example 1, 1.0% by mass in the Example 3, and 2.0% by mass in the Example 4, the battery thickness after storage at high temperature in a charged state has a tendency to increase as the amount of PMP added increases. Considering the results for the battery thicknesses after storage at high temperature in the battery of the Example 4 and that of the Comparative Example 2, in which the positive electrode active material was the same as that of the Example 4 but the amount of PMP added was 0% by mass, it is clear that the amount of PMP added to the nonaqueous electrolytic solution is preferably 2% by mass or less relative to the total mass of the nonaqueous electrolytic solution.

Furthermore, the Example 1 provided better results than those of the Comparative Example 2. Thus, interpolating the measurement results from the Example 1 and the measurement results from the Comparative Example 2, it is considered that the advantageous effects of adding PMP to the nonaqueous electrolytic solution are will not be manifested if the amount added is less than 0.2% by mass relative to the total mass of the nonaqueous electrolytic solution. Therefore, it is deemed that the amount of PMP preferably to be added is not less than 0.2% by mass and not more than 2.0% by mass relative to the total mass of the nonaqueous electrolytic solution.

Each battery of the Examples 5 to 7 had the same composition as that of the battery of the Example 1 except that the dissimilar metallic element added to lithium cobalt oxide as the positive electrode active material was titanium (Example 5), aluminum (Example 6), or erbium (Example 7) in place of the zirconium used in the Example 1. All yielded a good result for the battery thickness after storage at high temperature in a charged state. Hence, it is clear that the advantageous effects of the invention are exerted not only in the case where the dissimilar metallic element added to the lithium cobalt oxide serving as the positive electrode active material is zirconium but also in the case where the element is titanium, aluminum, or erbium.

Furthermore, the advantageous effects of the invention become salient when the positive electrode has a high packing density, which will contribute to slimming down of the outer can thickness. In the interest of higher capacity, the packing density of the positive electrode is preferably 3.7 g/ml or more, and the thickness of the outer can is preferably not more than 0.3 mm.

## Claims

1. A nonaqueous electrolyte secondary battery comprising:
a positive electrode containing positive electrode active material;
a negative electrode containing negative electrode active material;
a nonaqueous electrolyte containing a nonaqueous solvent and an electrolyte salt; and
a separator;
the positive electrode active material being composed of lithium-cobalt composite oxide containing at least one of zirconium, titanium, aluminum, and erbium, and
the nonaqueous electrolyte including an additive expressed by General Formula (1): 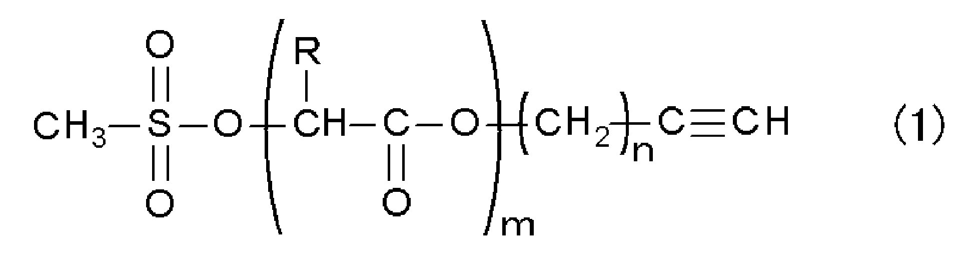 (where R is a methyl group or a hydrogen atom, m is 0 or 1, and n is 1 or 2).

2. The nonaqueous electrolyte secondary battery according to claim 1, wherein the nonaqueous electrolyte contains the additive in a ratio of 0.2 to 2.0% by mass relative to the total mass of the nonaqueous electrolyte.

3. The nonaqueous electrolyte secondary battery according to claim 1, wherein the compound expressed by General Formula (1) is a compound expressed by Chemical Structural Formula (2) or (3):

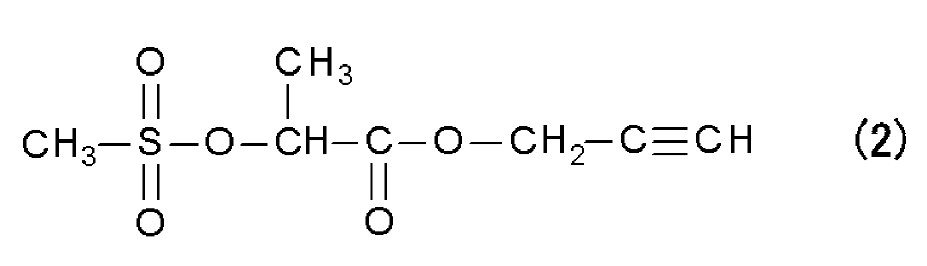

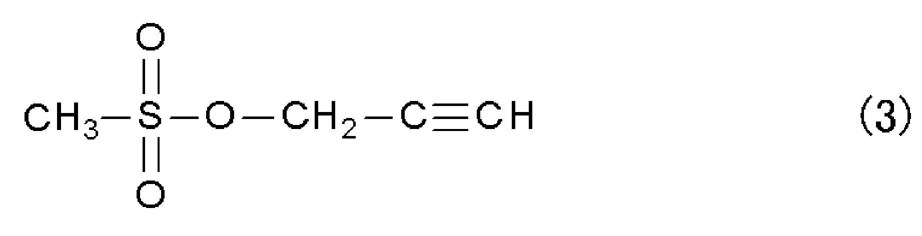

4. The nonaqueous electrolyte secondary battery according to claim 1, wherein the nonaqueous electrolyte further includes vinylene carbonate as the additive.
